# EUROPEAN PATENT APPLICATION

(11) **EP 1 471 773 A2**
(43) Date of publication of application: **27.10.2004**
(21) Application number: 03256969.1
(22) Date of filing: 04.11.2003
(51) Int. Cl.: H05B 6/64, H05B 6/80

(54) **Microwave heating using distributed semiconductor sources**

(30) Priority: 18.04.2003 US 418840
(71) Applicant: Northrop Grumman Corporation, Redondo Beach, California, 90278 (US)
(72) Inventor: Hadinger, Peter James, Oakton Virginia 22124 (US)
(74) Representative: Naismith, Robert Stewart

(57) **Abstract**

Distributed high power solid state microwave sources are provided to improve the efficiency of microwave heating applications. A plurality of solid state microwave sources can be distributed throughout and/or adjacent to a microwave environment with the microwave power output of the solid state microwave sources being directed toward the chamber. The distribution of the plurality of solid state microwave devices can be customized to the specific size and shape of the microwave chamber and/or specific regions/ compartments of the microwave chambers.

## Description

### TECHNICAL FIELD

The present invention relates generally to heating devices, and more particularly to microwave heating using distributed semiconductor sources.

### BACKGROUND OF THE INVENTION

Microwaves are electromagnetic waves whose frequencies range from approximately 300 megahertz (MHz) to 1000 gigahertz (GHz). The lower end of the microwave region is commonly used by radio and television services, and the upper end is bounded by infrared and optical spectrums. Microwave frequencies are also used for heating, where electrical energy is converted to electromagnetic waves, most commonly in the 1 to 40 GHz range. These waves excite the molecules of many materials and convert their energy to heat.

A limitation on the known sources of microwave radiation is the combined lack of power and control. Vacuum tubes and solid state devices are two different microwave sources currently known in the art. A conventional consumer microwave oven typically provides 500-1500 watts of power at a frequency of about 2.5 GHZ generated by a vacuum tube. The power supply that provides power to the vacuum tube and the vacuum tube itself are of a substantial size and weight, which limits the heating chamber to be small in comparison to the outside dimensions of the oven itself. The conventional microwave oven often requires devices such as turntables and reflector fans to evenly distribute the energy from the vacuum tube throughout the heating chamber, since the energy emanates from a single location.

There are many different types of tube sources of microwave power, (e.g., magnetrons, klystrons, gyrotrons). Tubes have advantages over solid state in that they are often capable of operating at higher frequencies and higher power levels. Power output and to a limited extent, frequency, can be adjusted with tube type sources. This can be done with dc bias voltages and magnetic fields. However, with the magnetron source, the most readily available and least expensive of the tube-type sources (for low power levels--less than several kW), the efficient power level cannot be easily controlled. Other types of tube sources can be used with power control, but they are very expensive and operate at the higher power levels of several tens of kW and more. For this reason, microwave ovens typically turn the magnetron on and off in a pulsing fashion to regulate the amount of energy imparted over time.

The main disadvantages of vacuum tubes compared to solid state devices are that they are large, bulky, very expensive, heavy and require high voltage from the anode to the cathode and high current for a filament. Tubes are also difficult to control and have short lifetimes. In general all microwave tubes produce microwave power by converting the kinetic energy of an electron beam in a vacuum into electromagnetic energy. All of these tubes have similar advantages and disadvantages associated with their use when compared to solid state devices. All of these tubes require a source of electrons. In all microwave tubes, this is usually provided by a hot filament. To drive the filament, a low voltage high current supply is required. The filament causes problem in that it is very sensitive to vibration, produces large energy losses due to its inefficient nature, contributes to the heating of the tube and limits the lifetime of the tube. In general, filament failure is one of the leading causes of tube failure.

The second requirement of microwave tubes is an electron beam moving at a considerable velocity. This places more requirements on the design and use of the tubes. To accelerate the beam and keep it from spreading, a high potential is required in a high vacuum environment. This required potential, in turn, requires the use of a high voltage, low current supply. These supplies are expensive, bulky and difficult to operate. To prevent scattering of the beam, the tube is designed as a high vacuum chamber. This contributes greatly to the cost and complexity of the microwave tube. Additionally, the loss of vacuum integrity is the second most common failure mode in microwave tubes. The third requirement in a microwave tube is a coupling structure to convert the energy in the electron beam into microwave power. These structures vary in different tubes and are very complex and difficult to machine. Typical machine tolerance is one ten thousands of an inch. Also microwave absorption in these structures is a big source of heat in these tubes. This requires some method of cooling that adds to the cost, bulk and complexity of the tube and the overall supporting structure.

Attempts have been made to employ solid state devices in place of vacuum tubes to provide microwave energy in heating chambers. However, since the solid state devices provide only a fraction of the power generated by the vacuum tube application, a combiner is employed to combine the power from a plurality of solid state devices. The combiner then provides the microwave energy to a heating chamber through a single radiating element. Since a single radiating element is employed, the microwave heating device also requires turners and reflector fans to evenly distribute the energy from the radiating element throughout the heating chamber.

### SUMMARY OF THE INVENTION

The following presents a simplified summary of the invention in order to provide a basic understanding of some aspects of the invention. This summary is not an extensive overview of the invention. It is intended neither to identify key or critical elements of the invention nor delineate the scope of the invention. Its sole purpose is to present some concepts of the invention in a simplified form as a prelude to the more detailed description that is presented later.

The present invention relates to microwave heating systems and methods employing distributed high power solid state microwave sources. A microwave heating device includes a heating environment or chamber that can be defined by one or more walls. A plurality of solid state microwave sources are distributed in a spaced apart relationship and operative to generate microwave power to at least a portion of the heating environment or chamber. The plurality of solid state microwave sources can be distributed within or about the at least one wall, such that the microwave power is directed toward the environment or chamber. Power control can be provided to control the power output levels of the plurality of solid state microwave sources collectively and/or individually. Phase control can be provided to control the phase of the microwave outputs signals of the plurality of solid state microwave devices to direct microwave energy power levels to desired locations with an environment or chamber. The environment or chamber can be divided into heating regions or compartments, and the power level to the individual heating regions or compartments modified based on the article to be heated.

In one aspect of the invention, the solid state microwave sources are provided employing an oscillator that operates in a microwave frequency range coupled to a high power amplifier that amplifies the microwave signal from the milliwatt range to the watt range. Alternatively, the power amplifier itself may be designed as a direct high-power oscillator. The high power amplifier is coupled to a radiating element (e.g., antenna, probe) that directs the microwave energy toward an article to be heated. The oscillator and/or the power amplifier can be fabricated from semiconductor material (e.g., Gallium Nitride) capable of delivering high-speed high-power signals. The solid state microwave sources can be wired devices or wireless devices. The distribution of the plurality of solid state microwave devices can be customized to the specific size and shape of the microwave environment and/or specific regions/ compartments of the microwave environment.

To the accomplishment of the foregoing and related ends, certain illustrative aspects of the invention are described herein in connection with the following description and the annexed drawings. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the drawings.

### BRIEF DESCRIPTION OF THE DRAWINGS

FIG. 1 illustrates a perspective view of a microwave heating device employing a plurality of distributed solid state microwave sources in accordance with an aspect of the present invention.

FIG. 2 illustrates a block diagram of a solid state microwave source in accordance with an aspect of the present invention.

FIG. 3 illustrates a block diagram of a solid state microwave source disposed on a substrate in accordance with an aspect of the present invention.

FIG. 4 illustrates a block diagram of a wireless microwave source in accordance with an aspect of the present invention.

FIG. 5 illustrates a block diagram of a microwave system in accordance with an aspect of the present invention.

FIG. 6 illustrates a microwave device configured for providing alternate power levels in different regions or compartments of a microwave chamber in accordance with an aspect of the present invention.

FIG. 7 illustrates an alternate microwave device configured for providing alternate power levels in different regions or compartments of a microwave chamber in accordance with an aspect of the present invention.

FIG. 8 illustrates yet another microwave device configured for providing alternate power levels in different regions or compartments of a microwave chamber in accordance with an aspect of the present invention.

FIG. 9 illustrates a microwave chamber having a plurality of wireless microwave sources disposed therein in accordance with an aspect of the present invention.

FIG. 10 illustrates a methodology for providing a solid state microwave source distributed system in accordance with an aspect of the present invention.

### DETAILED DESCRIPTION OF INVENTION

The present invention relates to the employment of distributed high power solid state microwave sources to provide more efficient microwave heating applications. Solid state devices capable of efficient high-power microwave operation are now being developed, primarily for radar and communications applications. The state solid microwave sources are provided employing an oscillator that operates in a microwave frequency range coupled to a high power amplifier that amplifies the microwave signal from the milliwatt range to the watt range. The high power amplifier is coupled to a radiating element (e.g., antenna, probe) that directs the microwave energy toward an article to be heated.

A plurality of solid state microwave sources can be distributed throughout and/or adjacent to a microwave chamber with the microwave power output of each solid state microwave directed toward the chamber. The distribution of the plurality of solid state microwave devices can be customized to the specific size and shape of the microwave chamber and/or specific regions/compartments of the microwave chambers. Since the solid state microwave sources can be quite small in size, a desired output can be provided for substantially smaller microwave heating devices than is possible with conventional vacuum tube applications.

The present invention employs distributed low power microwave sources to mitigate deficiencies associated with large signal point sources. Therefore, the microwave energy sources can be designed around the microwave device and/or article to be heated. The employment of solid state devices eliminates the problem associated with lifetime power degradation of high-power microwave tubes. Additionally, distributing the power generation among multiple integrated high power oscillators provides for more uniform heating without the need for rotation of the heated article, scattering fans and other techniques required to distribute energy from a high power point source. The smaller and less powerful individual semiconductor devices can be embedded into the walls of the heating chamber to minimize size and improve manufacturing efficiency.

A power supply source and a control system can cooperate to control the microwave energy power level provided by all of the solid state microwave sources concurrently in a given area of a chamber. Alternatively, the microwave energy power level provided by the solid state microwave sources can be controlled individually or in sets by one or more power supply sources and/or control system. In this manner, the power level provided by microwave sources can be customized to the shape, density, composition or other characteristics of the article to be heated, the chamber shape and size and/or regions or compartments of the chambers.

This can be accomplished by varying the power levels provided by individual microwave sources or turning certain microwave sources "ON" or "OFF based on a location of the microwave source with respect to the article to be heated. Alternatively, a control system can vary the microwave signal phase associated with one or more individual microwave sources to regulate power levels within a region through beam control. Beam control is the interaction of microwave signal levels with different phases to steer microwave energy or vary power levels at a desired location of an article or within a desired chamber region. The phasing of microwave sources can be pre-set or computer controlled to create "beams" of more intense energy that are optimized for heating articles of specific size, density, composition or other attribute. These "beams" can also direct less energy to other areas of the article where less heating is required or desired.

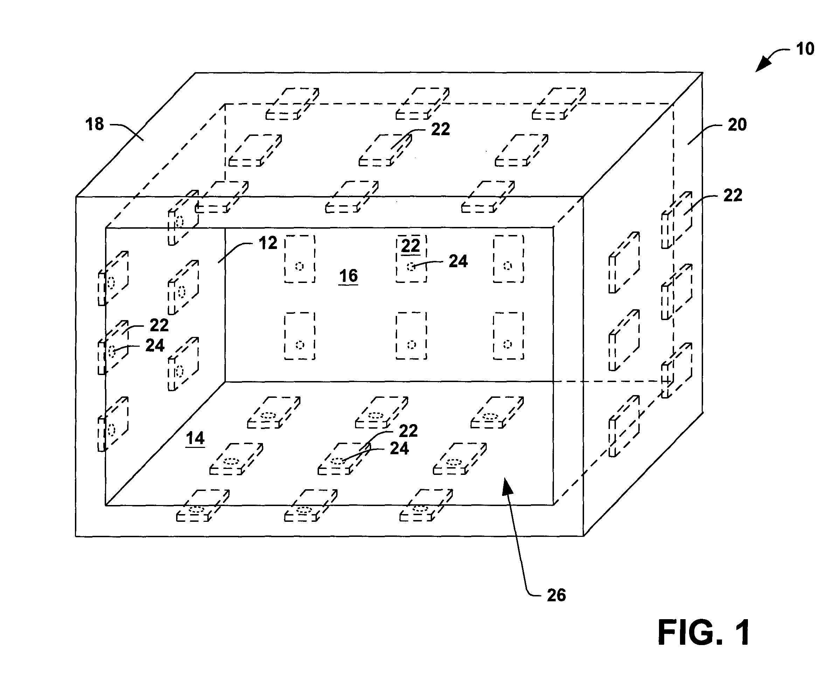

FIG. 1 illustrates a microwave heating device 10 employing a plurality of distributed solid state microwave sources 22 in accordance with an aspect of the present invention. The microwave heating device 10 is generally rectangular in shape, but using the flexibility afforded by this invention, could take on a variety of different shapes (e.g., cubical, cylindrical, spherical) and sizes more easily than current approaches. The present invention provides for distributing solid state microwave sources based on the size and shape of the microwave heating device, microwave heating environment or chamber and/or article to be heated.

The rectangular form of a microwave heating device 10 includes a first side wall 12, a second side wall 20, a rear wall 16, a bottom wall 14 and a top wall 18. The walls 12-20 define an environment or chamber 26 in which an article to be heated can be placed. A front wall or door (not shown) provides access to the chamber 26 so that the article can be enclosed and isolated from the outside environment. The walls 12-20 of the microwave heating device 10 include a plurality of solid state microwave sources 22 distributed within or adjacent the walls 12-20. It is to be appreciated that the environment can be an open environment in certain applications. Alternatively, a set of microwave sources can employ a single radiating element. Each of the plurality of solid state microwave sources 22 employ a radiating element 24 directed into the area of the chamber 26. Each of the solid state microwave sources 22 provide microwave energy at power outputs of about 1 watt to about 100 watts, such that the combination of solid state microwave sources 22 provide the desired output power necessary to heat a desired article.

A single power supply source can be employed to power the plurality of solid state microwave sources 22, such that the plurality of solid state microwave sources 22 are provided power concurrently to generate microwave energy into the area of the chamber 26. Alternatively, the power supply source and a control system can cooperate to control the microwave energy power provided by all of the solid state microwave sources 22 concurrently, or control the microwave energy power provided by the solid state microwave sources 22 individually or in sets. Additionally, phase control can be employed to direct energy power levels to desired regions of the chamber 26. In this manner, the power level provided by the plurality of microwave sources 22 can be customized to the shape, density, composition or other characteristics of the article to be heated, the chamber shape and size and/or regions or compartments of the chambers. This customization could be fixed to a specific article type or be adjustable by the operator or a computer program that optimizes the heating distribution.

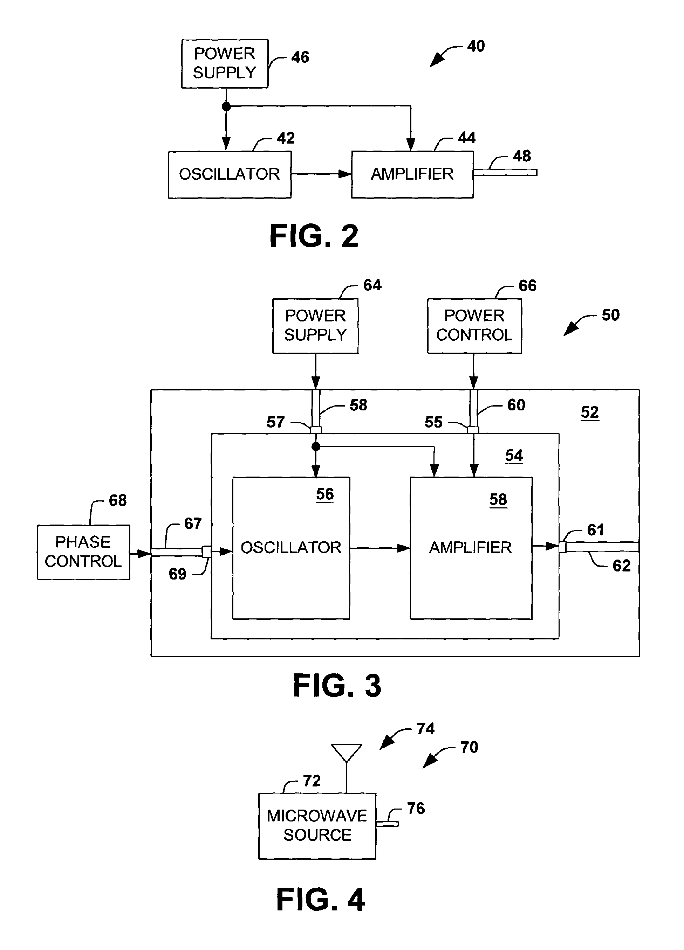

FIG. 2 illustrates a block diagram of a solid state microwave source 40 in accordance with an aspect of the present invention. The solid state microwave source 40 includes an oscillator 42 coupled to a power amplifier 44. The oscillator 42 is provided with frequency control that sets the frequency oscillation within a desired microwave frequency band. Additionally, the oscillator 42 can be provided with phase control. The output of the oscillator 42 is fed into the power amplifier 44 which boosts the microwave power level from the milliwatt range to the watt range (e.g., about 1 watt to about 100 watts). The output of the power amplifier 44 is coupled to a radiating element 48. The radiating element 48 can be a conductive probe, an antenna or any conductive element in which the microwave power from the power amplifier 44 can be harnessed and directed toward an article to be heated. A power supply 46 provides power to the solid state microwave source 40. The power supply 46 can provide power to a plurality solid state microwave sources similar to the microwave source 40, such that all of the microwave sources begin operation when the power supply 46 is turned to an "ON" state. The oscillator 42, the power amplifier 44 and the radiating element can be integrated into a single integrated circuit. Alternatively, the oscillator 42 and the power amplifier 44 can be integrated into a single integrated circuit and the radiating element 48 coupled to a pin of the integrated circuit.

It is to be appreciated that in the particular configuration of FIG. 1, a plurality of solid state microwave sources 40 can be distributed within or about a microwave chamber, such that the plurality of solid state microwave sources will operate at slightly offset frequencies due to manufacturing variations and oscillator drift. However, the variations in the plurality of solid state microwave sources mitigate standing waves and cooperate to provide a nominal microwave frequency (e.g., about 2.5 GHz). Alternatively, direct phasing of the oscillators can be provided. The direct phasing of oscillators can be pre-set or computer controlled to create "beams" of more intense energy that are optimized for heating articles of specific size, density, composition or other attribute. These "beams" can also direct less energy to other areas of the article where less heating is required or desired.

FIG. 3 illustrates a block diagram of a solid state microwave source 50 disposed on a substrate 52 in accordance with an aspect of the present invention. The solid state microwave source 50 includes an oscillator 56 coupled to a power amplifier 58 integrated into an integrated circuit 54. The oscillator 56 and/or the power amplifier 58 can be fabricated from semiconductor material (e.g., Gallium Nitride) capable of delivering high-speed high-power signals. The oscillator 56 is provided with frequency control that sets the frequency oscillation within a microwave frequency band. The output of the oscillator 56 is fed into the power amplifier 58 which boosts the microwave power level from the milliwatt range to the watt range. The integrated circuit 54 is disposed onto a substrate 52 such as a sheet of MYLAR or a fabricated circuit board. The output of the power amplifier 58 is coupled to a pin 61 of the integrated circuit 54. The pin 61 of the integrated circuit 54 is coupled to a trace 62 on the substrate 52. The trace 62 on the substrate 52 provides a radiating element that transmits the microwave energy that can be directed toward an article to be heated.

A power supply 64 provides power to the integrated circuit 54 through a trace 58 on the substrate and a pin 57 of the integrated circuit 54. The power is provided to both the oscillator 56 and the amplifier 58. A power control component 66 controls the level of power generated by the solid state microwave source 50. The power control component 66 is coupled to the power amplifier 66 through a trace 60 on the substrate and a pin 55 on the integrated circuit 54. A phase control component 68 controls the phase of the microwave power signal generated by the solid state microwave source 50. The phase control component 68 is coupled to the oscillator 56 through a trace 67 on the substrate and a pin 69 on the integrated circuit 54.

The power control component 66 can control the level of power generated by the power amplifier 58. This can be accomplished by a variety of different manners. For example, the voltage provided to the power amplifier 58 can be modified employing programmable attenuators or the like. Alternatively, the gain of the power amplifier 58 can be modified employing programmable impedance devices or the like. The power control component 66 can be coupled to a plurality of solid state microwave sources, such that power level adjustment of the plurality of solid state microwave sources can be controlled by the power control component 66. For example, the power control component 66 can be a programmable logic device having a plurality of outputs, a processor employing address and data buses to set the power levels, analog signals set by a digital signal processor through digital/ analog converters. Additionally, the phase control component 68 can also be coupled to a plurality of solid state microwave sources.

It is to be appreciated that functionality of the power control component 66 and the phase control component 68 can be achieved by a variety of different electronic and/or software designs. Alternatively, a power control component and/or a phase control component can be provided for each of the solid state microwave sources or a set of microwave sources. For example, the power control component 66 and/or the phase control component 68 can be a programmable register that contains information associated with a power level of the microwave source 50, which can be set and downloaded via a variety of different techniques.

FIG. 4 illustrates a wireless microwave source 70 in accordance with an aspect of the present invention. The wireless microwave source 70 includes a microwave source 72 coupled to an antenna 74 for receiving transmission signals. The wireless microwave source 70 also includes a radiating element 76 for directing microwave power or energy. The microwave source 72 can include an oscillator and a power amplifier coupled to the radiating element 76. Additionally, the microwave source 72 can include a power source. The power source can be active or passive similar to those provided in radio frequency identification (RFID) tags utilized in the retail industry. For example, if the power source is active, the power source will be charged and can be recharged by transmitting power signals to the microwave power source. An activation signal can then be transmitted to the wireless microwave source 70 to begin the generation of microwave energy. Periodic power transmissions can be transmitted to the wireless microwave source 70 to continue charging of the power source of the microwave source. Alternatively, a power source can be employed that provides sufficient power to the microwave source 72 to allow the microwave source 72 to generate microwave energy for a significant period of time. If the power source is passive, a power transmitter provides power signals continuously to the wireless microwave source 70 during transmission of the microwave energy to provide sufficient charge for the microwave source 72 to generate microwave energy at a desired power level.

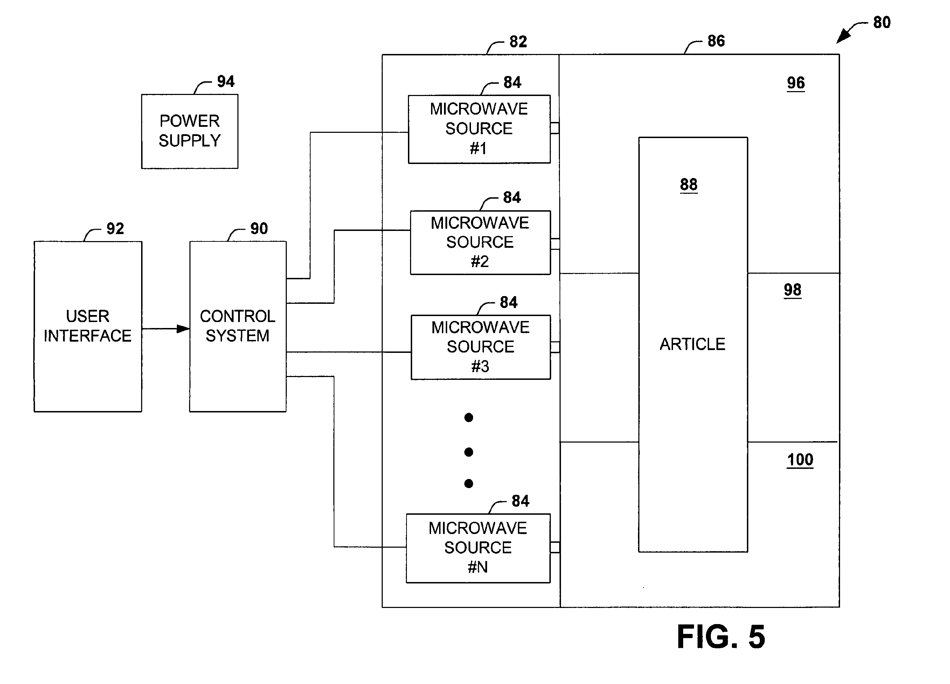

FIG. 5 illustrates a microwave system 80 in accordance with an aspect of the present invention. The microwave system 80 includes a heating chamber 86 containing an article 88 to be heated. The heating chamber 86 is divided into a first heating region 96, a second heating region 98 and a third heating region 100. A source chamber 82 contains a plurality of microwave sources 84 (labeled 1 to N, where N is an integer greater than 3) distributed throughout the source chamber 82 with radiating elements directed toward the heating chamber 86. The source chamber 82 can be a plurality of different shapes (e.g., rectangular, cubical, cylindrical, spherical) and sizes, such that the microwave sources 84 are distributed throughout the source chamber 82 based on the shape and size of the heating chamber 86. A control system 90 is coupled to each of the plurality of microwave sources 84. The control system 90 controls the power level and/or phasing of each of the microwave sources 84. A power supply 94 provides power to the control system 90 and the plurality of microwave sources 84.

A user interface 92 is coupled to the control system 90. The user interface 92 allows a user to select power levels associated with at least one heating parameter (e.g., article type, heating region, article composition). The at least one heating parameter can be associated with the article type being heated. For example, different types of articles require different power levels when being heated. In a conventional microwave oven, certain food types heat faster than other types. By employing different power levels based on the article type, more consistent and uniform heating is achieved. Additionally, the user interface 92 allows a user to select different power levels for different heating regions. For example, an article can heat faster at the ends than in the middle. Therefore, the power level can be increased in the second region 98 and/or decreased in the first heating region 96 and the third heating region 100. The article 88 to be heated can be more uniformly heated by adjusting the power level in different article regions. Alternatively, different article types can be placed into the different heating regions and concurrently heated at different power levels, so that more uniform heating is achieved.

It is to be appreciated that by providing a plurality of distributed solid state microwave sources, a variety of customized heating applications can be provided. For example, different heating regions can be provided with different microwave power levels. Therefore, a microwave heating chamber can be customized based on the article types or type placed in different heating regions with a single microwave heating device. Additionally, by providing individual control of the power output of the individual microwave heating sources, various microwave power level configurations can be provided in a single microwave heating device.

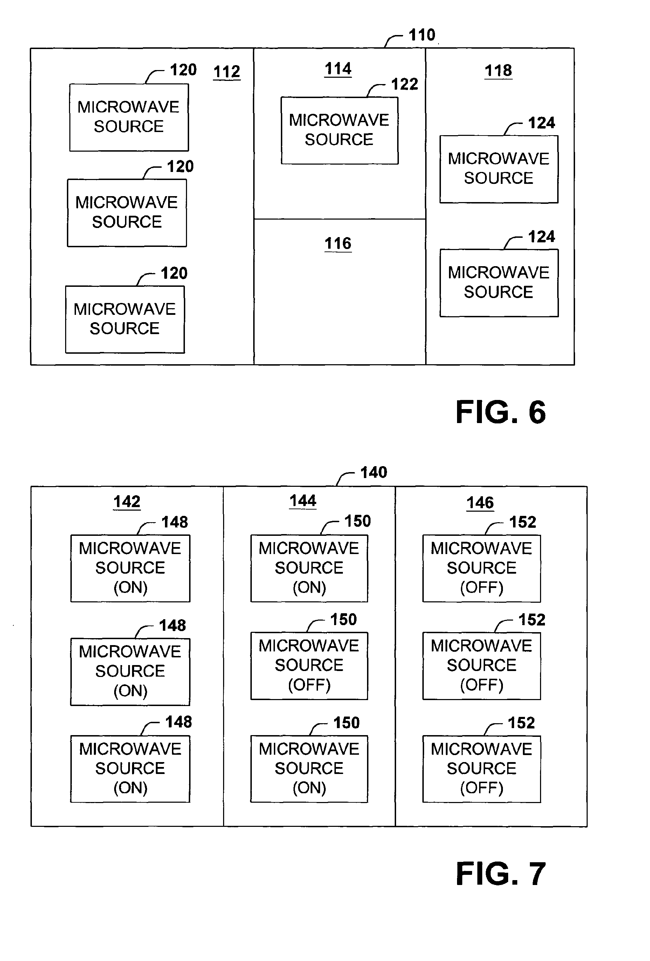

FIG. 6 illustrates a microwave device 110 configured for providing alternate power levels in different regions or compartments of a microwave chamber in accordance with an aspect of the present invention. The microwave device 110 can be a floor of a microwave oven or a floor of a microwave tray. The microwave device 110 includes a first compartment area 112, a second compartment area 114, a third compartment area 116 and a fourth compartment area 118. The first compartment area 112 includes three microwave sources distributed through the first compartment area 112. The second compartment area 114 includes a single microwave source 122 and the fourth compartment area 118 includes two microwave sources 124. The third compartment area 116 does not employ any microwave sources. The third compartment area 116 is isolated from the other areas and can be designated as a cold compartment. The first compartment area 112 is operative to heat articles that require higher power levels to heat than the second compartment area 114 and the fourth compartment area 118. The fourth compartment area 118 is operative to heat articles that require power levels that are greater than the second compartment area 114. For example, the microwave device 110 can be a food tray that can be refrigerated, such that the third compartment area 116 is kept cold for cold foods, while the first compartment area 112, the second compartment area 114 and the fourth compartment area 118 heat the foods within the respective compartment areas at different power levels.

FIG. 7 illustrates an alternate microwave device 140 configured for providing alternate power levels in different regions or compartments of a microwave chamber. The microwave device 140 can be a floor of a microwave oven or a floor of a microwave tray. The microwave device 140 includes a first region or compartment 142 with a plurality of microwave sources 148, the second region or compartment 144 includes a plurality of microwave sources 150 and the third region or compartment 146 includes a plurality of microwave sources 152. Each of the plurality of microwave sources 148, 150 and 152 are operative to provide substantially similar microwave power output. In the first region or chamber 142 all of the microwave sources 148 are turned "ON" to provide a first power level. In the second region or chamber 144 one of the microwave sources 150 are turned to an "OFF" state, while the remaining microwave sources 150 are turned "ON" to provide a second power level. All of the microwave sources 152 in the third region or compartment 146 are turned to an "OFF" state to provide a cold compartment. Various power levels can be provided in any of the regions or compartments by turning a specific number of microwave sources "ON" and/or "OFF".

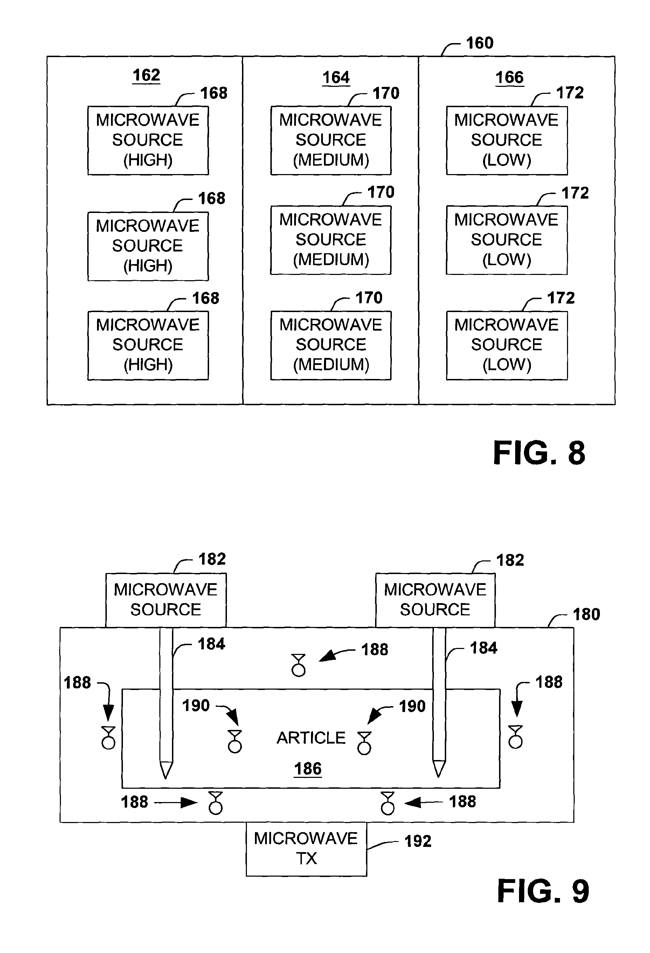

FIG. 8 illustrates yet another microwave device 160 configured for providing alternate power levels in different regions or compartments of a microwave chamber. The microwave device 160 can be a floor of a microwave oven or a floor of a microwave tray. The microwave device 160 includes a first region or compartment 162 with a plurality of microwave sources 168, a second region or compartment 164 includes a plurality of microwave sources 170 and a third region or compartment 166 includes a plurality of microwave sources 172. Each of the plurality of microwave sources 168, 170 and 172 can provide high, medium and low power outputs. In the first region or compartment 162, all of the microwave sources 168 provide high power output to provide a first power level. In the second region or compartment 164 all of the microwave sources 170 provide medium power to provide power output at a second power level. All of the microwave sources 172 in the third region or compartment 166 are set to a low power level to provide a low power output or a third power level. Various power levels can be provided in any of the compartment by varying the power output levels of the microwave power sources 168, 170 and 172.

An additional advantage to employing distributed semiconductor microwave sources is the variety of shapes, sizes and configurations that the microwave sources can provide. For example, since the solid state devices can be substantially small in size, the microwave sources can be substantially small in size. Additionally, since the microwave devices can be wireless, the microwave devices can be portable and moved around a microwave chamber customizing the heating of a desired article.

FIG. 9 illustrates a microwave chamber 160 having a plurality of wireless microwave sources disposed therein in accordance with an aspect of the present invention. An article 186 to be heated is placed within the microwave chamber 160. A plurality of wireless microwave sources 188 are then placed around the article 186 to be heated. Additionally, a plurality of microwave sources 190 are placed within the article 186 to be heated, such that the article 186 is heated from the inside out by the microwave sources 190. A microwave power transmitter 192 transmits signals to the wireless microwave sources 188 and 190, which can amplify the signals to provide microwave power or energy. Additional heating is provided by a plurality of microwave sources 182 adjacent the chamber 180. The microwave sources 182 are coupled to probes 184 which extend through the article 186 to be heated. The probes 184 perform the function of the radiating element so that microwave energy can be transmitted inside the article 186 to be heated for providing uniform heating of the article 186. It is to be appreciated that a plurality of heating configurations customized to the microwave chamber and/or article to be heated can be provided by employing the distributed solid state microwave sources in accordance with the present invention.

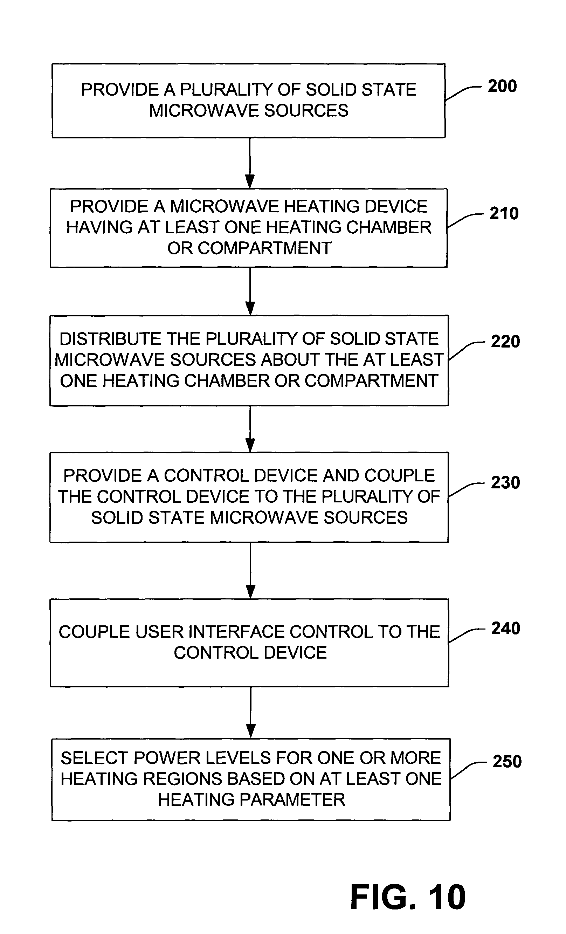

In view of the foregoing structural and functional features described above, a methodology in accordance with various aspects of the present invention will be better appreciated with reference to FIG. 10. While, for purposes of simplicity of explanation, the methodology of FIG. 10 is shown and described as executing serially, it is to be understood and appreciated that the present invention is not limited by the illustrated order, as some aspects could, in accordance with the present invention, occur in different orders and/or concurrently with other aspects from that shown and described herein. Moreover, not all illustrated features may be required to implement a methodology in accordance with an aspect the present invention.

FIG. 10 illustrates a methodology for providing a solid state microwave source distributed system in accordance with an aspect of the present invention. The methodology begins at 200 where a plurality of solid state microwave sources are provided. The plurality of solid state microwave sources can be fabricated employing an oscillator set at a microwave frequency band and a power amplifier that amplifies the oscillator signal from a power level in a milliwatt range to a power level in a watt range (e.g., about 1 watt to about 100 watts). The power output of the power amplifier can be coupled to a radiating element, such as a probe or antenna so that the microwave energy or power can be directed at the article to be heated. The oscillator and/or the power amplifier can be fabricated from semiconductor material (e.g., Gallium Nitride) capable of delivering high-speed high-power signals. The oscillator and the power amplifier and optionally the radiating element can be integrated into a single integrated circuit.

At 210, a microwave heating device is provided having at least one heating chamber or compartment. The microwave heating device can be a microwave oven or a microwave tray. The heating device can be a variety of different shapes (e.g., rectangular, cubical, cylindrical, spherical) and sizes. The heating device can be separated into compartments or regions so that different power levels can be provided to the different compartments or regions within the heating chamber. At 220, the plurality of solid state microwave sources are distributed throughout the at least one heating chamber or compartment. For example, if it is known that more power is desired in a specific compartment or region for a fixed application, more microwave sources can be placed into that area. Alternatively, the microwave sources can be distributed evenly about the chamber and the power level outputs and/or microwave signal phases controlled by a control device. The microwave sources can be disposed and/or adjacent to walls surrounding the chamber. The methodology then proceeds to 230.

At 230, a control device is provided that is coupled to the plurality of solid state microwave sources. Additionally, a power supply is provided to power the control device and the plurality of microwave sources. The control device can be operative to control the power level output of the plurality of solid state microwave sources concurrently, such that the power level outputs of all of the plurality of solid state microwave sources are substantially the same during changes to the total power output to the heating chamber or compartment. Alternatively, the control device can be operative to adjust the power level outputs of each of the plurality of solid state microwave sources individually or by sets of solid state microwave sources (e.g., by region). Furthermore, the control device can be operative to control the phase of the plurality of solid state devices to direct a desired microwave energy power level to a desired location. A user interface is then coupled to the power control device so that a user can control the power levels and/or phasing of the plurality of solid state microwave sources. At 250, an article to be heated is placed in the chamber and power levels for one or more heating regions are selected based on at least one heating parameter. The at least one heating parameter can be based on article type, article composition and/or heating region or compartment.

What has been described above includes exemplary implementations of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the spirit and scope of the appended claims.

## Claims

1. A microwave heating system comprising:
a microwave heating device having a heating environment; and
a plurality of solid state microwave sources distributed in a spaced apart relationship and operative to generate microwave power to at least a portion of the heating environment.

2. The system of claim 1, the heating environment being a heating chamber defined by at least one wall, the plurality of solid state microwave sources being distributed throughout the at least one wall.

3. The system of claim 1, at least one of the solid state microwave sources is comprised of an oscillator that operates in a microwave frequency range and a power amplifier coupled to the oscillator, the power amplifier amplifying the power of the oscillator to about 1 watt to about 100 watts, the power being directed into the heating environment by a radiating element coupled to the power amplifier.

4. The system of claim 1, the heating environment comprising a plurality of heating regions, the plurality of solid state microwave sources operative to provide varying power output levels in at least one of the plurality of heating regions.

5. The system of claim 4, the varying power output levels being provided by varying the number of solid state microwave sources associated with at least one heating region of the plurality of heating regions.

6. The system of claim 4, the varying power output levels being provided by varying the power output levels of solid state microwave sources associated with at least one heating region of the plurality of heating regions.

7. The system of claim 1, at least one of the solid state microwave sources being a wireless device.

8. The system of claim 1, at least one of the plurality of solid state microwave sources generates a microwave signal phased to interact with a microwave signal generated by another of the plurality of solid state devices to control the microwave energy power level at a desired location within the heating environment.

9. The system of claim 1, at least one of the solid state microwave sources being disposed within an article to be heated.

10. The device of claim 1, the microwave heating device being one of a microwave oven and a microwave tray.
